Europäisches Patentamt

European Patent Office

Office européen des brevets

(11) Veröffentlichungsnummer: **0 142 021**
**A1**

# (12) EUROPÄISCHE PATENTANMELDUNG

(21) Anmeldenummer: 84112084.3

(22) Anmeldetag: 09.10.84

(51) Int. Cl.⁴: **G 02 B 6/12**
**G 02 F 1/03**

(30) Priorität: 14.10.83 DE 3337513

(43) Veröffentlichungstag der Anmeldung:
22.05.85 Patentblatt 85/21

(84) Benannte Vertragsstaaten:
DE FR GB

(71) Anmelder: Siemens Aktiengesellschaft
Berlin und München Wittelsbacherplatz 2
D-8000 München 2(DE)

(72) Erfinder: Auracher, Franz, Dr. Dipl.-Ing.
Eichenstrasse 26
D-8021 Baierbrunn(DE)

(54) Steuerbares integriert-optisches Bauelement.

(57) Ein steuerbares integriert-optisches Bauelement, bestehend aus einem Substrat mit elektrooptischen Eigenschaften, in das optische Wellenleiter (1) eingebracht sind und bei dem auf oder neben den optischen Wellenleitern (1) Metallisierungen in Form von mehreren Elektroden (4) aufgebracht sind, die mit elektrischen Spannungen beaufschlagbar sind, wobei neben den optischen Wellenleitern (1) eine koplanare Mikrowellenleitung angeordnet ist, wobei jeweils eine Elektrode (4) elektrisch mit jeweils einem Streifen (2, 5) der Mikrowellenleitung verbunden ist, soll einen reproduzierbaren Mikrowellenbetrieb auch für möglichst hohe Mikrowellenfrequenzen ermöglichen. Die Elektroden (4) sind zwischen den Streifen (2, 5) der Mikrowellenleitung angeordnet. Wenn die Leitungen (3) zwischen den Elektroden (4) und den Streifen (2, 5) der Mikrowellenleitung Streifenleitungen sind, kann das integriert-optische Bauelement in Planartechnik hergestellt werden. Dadurch wird die Fabrikation wesentlich vereinfacht.

SIEMENS AKTIENGESELLSCHAFT
Berlin und München

Unser Zeichen
VPA  83 P 1 8 4 3 E

0142021

Steuerbares integriert-optisches Bauelement.

Die Erfindung betrifft ein steuerbares integriert optisches Bauelement nach dem Oberbegriff des Anspruchs 1.

Steuerbare integriert-optische Bauelemente, wie z.B. Richtkoppler oder Mach-Zehnder-Interferometer, können als Schalter oder Modulatoren verwendet werden. Bei elektrooptischen Bauelementen wird ein elektrisches Feld zur Modulation von Licht benützt. In der einfachsten Anordnung, dem
Phasenmodulator, wird mit Hilfe des elektrischen Feldes die
Brechzahl geändert und dadurch die Ausbreitungskonstante Beta
und damit die Phasenlage des Lichtes moduliert. Mit entsprechenden Elektroden- und Wellenleiter-Anordnungen kann
die Intensität des Lichtes auf verschiedene Weise moduliert
werden. Ein elektrisches Feld kann beispielsweise dazu verwendet werden, eine Reflexionsschicht so zu steuern, daß
Licht teilweise oder ganz reflektiert wird. Weiter kann mit
einem elektrischen Feld der Brechungsindex eines Wellenleiters soweit abgesenkt werden, daß die Intensität des geführten Lichtstrahles teilweise oder ganz in Substratmoden überkoppelt. Eines der wichtigsten elektrooptischen Bauelemente ist der steuerbare Richtkoppler, der gekoppelte Wellenleiter aufweist. Die Intensitätsmodulation bzw. Umschaltung des Lichtes auf einen der Ausgangswellenleiter beruht
dabei auf der elektrischen Verstimmung der gekoppelten Wellenleiter. Die Verstimmung erfolgt durch eine entgegengesetzte Brechzahländerung in den gekoppelten Wellenleitern.
Eine Verbesserung des Modulationsgrades bzw. der Nebensprechdämpfung ist mit einem modifizierten Richtkoppler nach
Art des Alternierenden -Delta-Beta-Prinzips möglich, wie es

My 1 Bla/13.10.1983

von H. Kogelnik und R.V. Schmidt (Zeitschrift IEEE J. Quantum Electronics, Jhg.1976, QE-12, 396-401) beschrieben worden ist. Hierbei sind die Elektroden des Richtkopplers in einzelne Sektionen aufgeteilt und werden mit alternierender Modulationsspannung angesteuert. Beim Intensitätsmodulator nach dem Mach-Zehnder-Prinzip wird die ankommende geführte Lichtleistung gleichmäßig auf zwei Wellenleiter aufgeteilt. Die Teilwellen in diesen beiden Wellenleitern werden sodann elektrooptisch in unterschiedlicher Weise phasenmoduliert. Nach der Zusammenführung dieser beiden Teilwellen entsteht durch Interferenz intensitätsmoduliertes Licht am Ausgang des Mach-Zehnder-Interferometers.

In der deutschen Patentschrift 32 18 626 C1 ist ein steuerbares integriert-optisches Bauelement vorgeschlagen worden, bei dem auf oder neben dem optischen Wellenleiter Metallisierungen in Form von mehreren Elektroden aufgebracht sind, die mit elektrischen Spannungen beaufschlagbar sind, wobei neben den optischen Wellenleitern eine koplanare Mikrowellenleitung angeordnet ist, wobei jeweils eine Elektrode mit einer möglichst kurzen Leitung mit jeweils einem Streifen der Mikrowellenleitung verbunden ist. Bei einem solchen steuerbaren integriert-optischen Bauelement sind die Vorteile der Lauffeldleitung, nämlich eine prinzipiell erreichbare große Modulationsbandbreite, mit den Vorteilen von konzentrierten Elektrodenstücken, nämlich eine flexible Wahl der Spannungspolarität an den Elektroden, miteinander verbunden. Dadurch, daß bei diesem bekannten integriert-optischen Bauelement die Hochfrequenzleitung nicht mehr an die Abmessungen der optischen Wellenleiter gebunden ist, kann diese Hochfrequenzleitung ziemlich große Querschnittsabmessungen aufweisen. Auf diese Weise ergibt sich ein sehr geringer Serienwiderstand der Hochfrequenzleitung.

Dadurch, daß bei diesem bekannten integriert-optischen
Bauelement die Elektrodenabschnitte sich durch kurze
Bondverbindungen mit der Hochfrequenzleitung verbinden
lassen, kann ohne Schwierigkeiten eine alternierende
Spannungspolarität den Elektroden und kann damit ohne
Schwierigkeiten ein alternierendes elektrisches Feld den
optischen Wellenleitern zugeführt werden. Auf diese
Weise kann beispielsweise das vorteilhafte Alternierende
-Delta-Beta-Prinzip mit den Vorteilen einer breitbandigen
Lauffeldleitung verbunden werden. Dadurch, daß bei diesem bekannten integriert-optischen Bauelement die Hochfrequenzleitung neben den optischen Wellenleitern angeordnet
ist, kann diese Hochfrequenzleitung ohne Probleme auf
einem anderen dielektrischen Material aufgebracht werden,
mit dem das optische Substrat seitlich beschichtet werden
kann oder das getrennt neben den optischen Wellenleitern
angeordnet ist. Auf diese Weise kann, wenn die Hochfrequenzleitung z.B. auf Keramik oder besser noch auf Quarzglas aufgebracht ist und die Elektroden sich auf Lithiumniobat befinden, für die steuernde Hochfrequenzwelle eine
solche Phasengeschwindigkeit geschaffen werden, daß die
optische Welle in den optischen Wellenleitern in Lithiumniobat und die steuernde Welle auf der Hochfrequenzleitung
sich in ihren Phasengeschwindigkeiten annähern.

Die Herstellung der Bondverbindungen zwischen den einzelnen Elektroden und den jeweiligen Streifen der Mikrowellenleitung ist bei diesem bekannten integriert-optischen
Bauelement aufwendig. Die langen Bondverbindungen weisen
bei diesem bekannten integriert-optischen Bauelement relativ hohe Induktivitäten auf, wodurch der Frequenzgang bei
diesem bekannten integriert-optischen Bauelement verschlechtert ist. Außerdem sind diese Bondverbindungen unterschiedlich lang, was wiederum unterschiedlich große Induktivitäten bei diesen Bondverbindungen zur Folge hat. Diese unterschiedlich großen Induktivitäten lassen jedoch einen reproduzierbaren Mikrowellenbetrieb eines solchen bekannten integriert-optischen Bauelementes kaum zu.

Der vorliegenden Erfindung liegt die Aufgabe zugrunde, ein steuerbares integriert-optisches Bauelement der eingangs genannten Art anzugeben, das einen reproduzierbaren Mikrowellenbetrieb ermöglicht.

Diese Aufgabe wird erfindungsgemäß durch ein steuerbares, integriert-optisches Bauelement nach dem Anspruch 1 gelöst.

Dadurch, daß die Elektroden des integriert-optischen Bauelementes zwischen den Streifen der Mikrowellenleitung angeordnet sind, können wenigstens einige der Leitungen zwischen Elektroden und Streifen der Mikrowellenleitung gegenüber dem bekannten integriert-optischen Bauelement in ihrer Leitungslänge praktisch halbiert werden. Damit ist hinsichtlich der Reproduzierbarkeit beim Mikrowellenbetrieb bereits eine wesentliche Verbesserung gegenüber dem bekannten integriert-optischen Bauelement erzielt. Besonders vorteilhaft ist eine Ausführungsform, bei der die Elektroden praktisch in der Mitte zwischen den beiden Streifen der Mikrowellenleitung liegen. Dann sind nämlich die Leitungen zwischen den einzelnen Elektroden und den jeweiligen Streifen der Mikrowellenleitung praktisch gleich lang.

Die eben genannten Verbesserungen können auch mit Bondverbindungen erzielt werden. Um jedoch das Herstellungsverfahren eines erfindungsgemäßen integriert-optischen Bauelementes zu vereinfachen, können die Leitungen zwischen den Elektroden und den Streifen der Mikrowellenleitung als Streifenleitungen ausgebildet werden. In diesem Fall ist zur Herstellung der Elektronensrahlen eines
integriert-optischen Bauelementes nur ein einziger
Maskenschritt notwendig. Da keine zusätzlichen Bondverbindungen hergestellt werden müssen, ist die Herstellung
eines solchen integriert-optischen Bauelementes fertigungstechnisch erheblich einfacher. Außerdem wird zur Herstellung
einer Bondverbindung eine Fläche von mindestens 50µm x 50µm
benötigt, weil der Bonddraht ja möglichst niederohmig sein
soll. Jede solche Bondververbindung weist jedoch eine zusätzliche Kapazität auf, die eine zusätzliche Reflexion der
Mikrowelle verursacht und die daher den Betrieb eines integriert-optischen Bauelementes stört.

Die Elektrodenelemente bilden zwischen den Wellenleitern
eine Kapazität aus. Diese Kapazität ist bereits bei dem
bekannten integriert-optischen Bauelement berücksichtigt.
Zwischen einem Streifen der Mikrowellenleitung und einem
unmittelbar benachbarten Elektrodenelement, das ein anderes
Potential als dieser Streifen der Mikrowellenleitung aufweist, wird jedoch ebenfalls eine Kapazität ausgebildet,
die bei dem Design des bekannten integriert-optischen Bauelementes nicht berücksichtigt worden ist und die eine
Frequenzgangverschlechterung verursacht. Wenn mindestens
einer der beiden Streifen der Mikrowellenleitung in Laufrichtung der Mikrowelle verschiedene Breiten aufweist, können damit in erfindungsgemäßer Weise unterschiedliche Kapazitäten zwischen Elektrodenelementen und Streifen der
Mikrowellenleitung ausgeglichen werden. Eine solche Variation der Breite eines Streifens der Mikrowellenleitung ist
besonders dann sinnvoll, wenn dieser Streifen der Mikrowellenleitung einen relativ niedrigen Widerstand aufweist.

Integriert-optische Bauelemente nach der Erfindung eignen
sich besonders für Picosekunden-Schalterbetrieb, Picosekunden-Modulatorbetrieb und Picosekunden-Logikbetrieb.

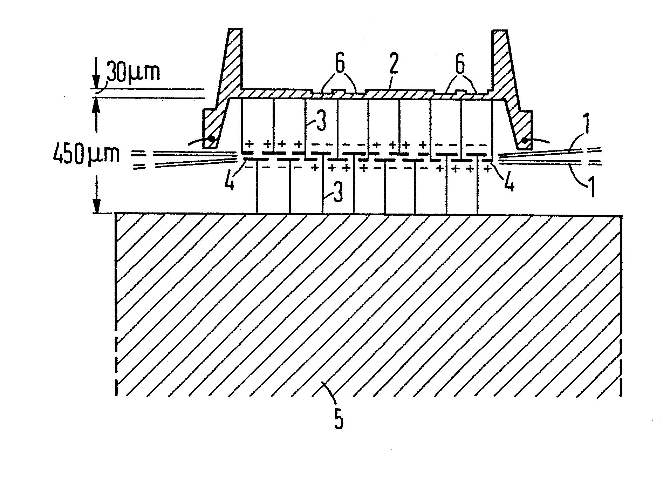

Ausgestaltungen und Vorteile der Erfindung sind in der Beschreibung und der Zeichnung dargestellt.

Die Figur zeigt ein Ausführungsbeispiel nach der Erfindung.

In der Figur ist schematisch ein sehr schneller Richtkoppler-Modulator nach dem Alternierenden -Delta-Beta-Prinzip mit geringen Einfügeverlusten für eine optische Wellenlänge von 1,3μm in Lithiumniobat dargestellt. Mit einem solchen erfindungsgemäßen Richtkoppler-Modulator kann eine Datenrate von mindestens 6 Gigabit pro Sekunde bei einem Einfügeverlust von 2 dB übertragen werden. Ein solcher Richtkoppler-Modulator erlaubt eine einfache und reproduzierbare Herstellung.

Der planare Richtkoppler-Modulator nach der Figur weist eine koplanare Mikrowellenleitung mit einem Wellenwiderstand von 75 Ohm auf. Die Mikrowellenleitung besteht aus den beiden Streifen 2 und 5. Der Streifen 5 befindet sich auf Masse-Potential. Der Streifen 2 weist den Potentialverlauf der Mikrowelle auf. Die Steuerelektroden 4 sind in der Mitte zwischen den Streifen 2 und 5 der Mikrowellenleitung angeordnet. Die Streifenleiter 3 zwischen den Steuerelektroden 4 und den Streifen 2 und 5 sind etwa gleich lang und können in Planartechnik hergestellt werden.

Durch die Belastung der Mikrowellenleitung mit den diskreten Elektroden 4, die sich auf den optischen Wellenleitern 1 befinden und durch Streifenleitungen mit den Streifen 2 und 5 der Mikrowellenleitung verbunden sind, wird der Wellenwiderstand der Gesamtleitung so herabgesetzt, daß sich ein Gesamtwiderstand von etwa 50 Ohm ergibt. Dabei ist zu beachten, daß der Abstand zwischen den einzelnen Elektrodenstücken 4 längs der Mikrowellenleitung gegenüber der Wellenlänge der Mikrowelle klein bleiben muß. Wenn ZO der Wellenwiderstand der koplanaren Mikrowellenleitung ohne Belastung
und CO ihr Kapazitätsbelag ist, dann ist der effektive
Wellenwiderstand Z1 der belasteten Leitung

$$Z1 = ZO \, / \, \sqrt{1 + CE \, / \, CO} \quad ,$$

wenn mit CE der Kapazitätsbelag der Elektrodenelemente 4
bezeichnet wird. Die für die Phasengeschwindigkeit der
Mikrowelle längs der belasteten Mikrowellenleitung charakteristische Verzögerungszeit T1 ergibt sich dabei zu

$$T1 = TO \cdot \sqrt{1 + CE \, / \, CO} \quad ,$$

wenn mit TO die Verzögerungszeit der unbelasteten Mikrowellenleitung und mit CE und CO die oben angegebenen Kapazitäten bezeichnet werden.

Die optischen Wellenleiter 1 können dadurch erzeugt werden,
daß 6μm breite Titanstreifen mit einer Dicke von 70 nm zehn
Stunden lang bei 1050°C in feuchter Sauerstoffatmosphäre in
das Lithiumniobat-Substrat eindiffundieren. Diese Parameter zur Herstellung der optischen Wellenleiter 1 garantieren sehr niedrige Einfügeverluste, wenn die optischen
Wellenleiter 1 an beiden Enden mit Monomode-Fasern gekoppelt werden. Der Abstand zwischen den beiden Titan-
Streifen zur Herstellung der optischen Wellenleiter 1 beträgt
beispielsweise 6μm, was eine einfache Koppellänge von 2,7 mm
bei dem integriert-optischen Bauelement zur Folge hat. Innerhalb einer einfachen Koppellänge kann das Licht von einem
der optischen Wellenleiter 1 gerade vollständig zum anderen
der beiden optischen Wellenleiter 1 übergekoppelt werden.

Die Länge des Richtkoppler-Modulators beträgt beispielsweise 10 mm. Zwischen den optischen Wellenleitern 1 und den Elektrodenelementen 4 ist eine 0,3µm dicke Siliziumdioxid-Zwischenschicht angeordnet. Diese Zwischenschicht kann bei 400°C mit Hilfe einer chemischen Dampfabscheidung aus einem Plasma heraus aufgebracht werden. Die Elektrodenelemente 4 bestehen beispielsweise aus 1,6µm dickem Aluminium und können mit Hilfe eines reaktiven Ionenätzprozesses strukturiert werden. Der fertige Richtkoppler-Modulator kann über Stoßkopplungen mit Monomode-Fasern verbunden werden. Üblicherweise wird die Mikrowellenleiter-Struktur mit einem 50 Ohm Widerstand abgeschlossen. Die gemessenen optischen Ein-Einfügeverluste betragen 2 dB, die Betriebsspannung beträgt bei niedrigen Mikrowellenfrequenzen etwa 16 Volt für 100% Modulation oder 9,5 Volt für 10 bis 90% Modulation. Der Richtkoppler-Modulator nach der Figur war für eine Bandbreite von 4,2 GHz entworfen unter Berücksichtigung von Laufzeiteffekten und der frequenzabhängigen Dämpfung der Elektroden. Die Geschwindigkeit des Modulators wurde mit einem schnellen elektrischen Pulsgenerator (100 ps Anstiegszeit) und einer schnellen Indium-Gallium-Arsenid/Indium-Phosphid- PIN-Fotodiode (60...80 ps Anstiegszeit) als Detektor getestet. Die gemessene Anstiegszeit des detektierten optischen Impulses betrug 135 ps. Daher besitzt das modulierte Signal eine Anstiegszeit von weniger als 70 ps. Der kürzeste elektrische Impuls (Halbwertsbreite von 140 ps) hatte einen detektierten optischen Impuls mit einer Halbwertsbreite von 160 ps zur Folge.

Der Abstand zwischen dem Streifen 2 und dem Streifen 5 beträgt 450 Mikrometer. Der Streifen 2 hat eine Breite von 30 Mikrometern. An denjenigen Stellen 6, an denen dem Streifen 2 unmittelbar Elektrodenelemente 4 benachbart sind, die ein anderes Potential aufweisen als der Streifen 2, weist dieser Streifen 2 Einbuchtungen auf. Zwischen diesen
Stellen 6 und den unmittelbar benachbarten Elektrodenelementen 4 sind beim Mikrowellenbetrieb Kapazitäten ausgebildet, die durch diese Einbuchtungen an den Stellen 6 kompensiert werden. Die Elektrodenelemente 4 sind so angeordnet,
daß die elektrische Verbindung zwischen jedem lokalen Bereich eines jeden Elektrodenelementes 4 zum zugehörigen
Streifen 2 bzw. 5 der Mikrowellenleitung praktisch gleich
lang ist. Auf diese Weise werden zusätzliche Induktivitäten,
die von der Ausdehnung der einzelnen Elektrodenelemente 4
zusätzlich noch herrühren könnten, vermieden. Von der elektrischen Wirkung her gehören also nebeneinanderliegende
Elektrodenelemente 4, die jeweils einen einzigen der optischen Wellenleiter 1 bedecken, zusammen. Von der elektrischen Funktion her gibt es also insgesamt 8 Elektroden, die
zusammen die beiden optischen Wellenleiter 1 bedecken. Diese
von der elektrischen Funktion her gesehen acht Elektroden
sind alternierend mit der Koplanarleitung verbunden. Die
Grenzfrequenz eines erfindungsgemäßen Modulators übersteigt
6 GHz.

Patentansprüche:

1. Steuerbares integriert-optisches Bauelement, bestehend aus einem Substrat mit elektrooptischen Eigenschaften, in das mindestens ein optischer Wellenleiter (1) eingebracht ist und bei dem auf oder neben dem mindestens einen optischen Wellenleiter (1) Metallisierungen in Form von mehreren Elektroden (4) aufgebracht sind, die mit elektrischen Spannungen beaufschlagbar sind, wobei neben dem mindestens einen optischen Wellenleiter (1) eine koplanare Mikrowellenlei Mikrowellenleitung angeordnet ist, wobei jeweils eine Elektrode (4) elektrisch mit jeweils einem Streifen (2, 5) der Mikrowellenleitung verbunden ist, dadurch gekennzeichnet, daß die Elektroden (4) zwischen den Streifen (2, 5) der Mikrowellenleitung angeordnet sind.

2. Steuerbares integriert-optisches Bauelement nach Anspruch 1, dadurch gekennzeichnet, daß die einzelnen Elektroden (4) mit jeweils einem Streifen (2, 5) der Mikrowellenleitung über etwa gleich lange Leitungen (3) verbunden sind.

3. Steuerbares integriert-optisches Bauelement nach Anspruch 1 oder 2, dadurch gekennzeichnet, daß die Leitungen (3) Streifenleitungen sind.

4. Steuerbares integriert-optisches Bauelement nach einem der Ansprüche 1 bis 3, dadurch gekennzeichnet, daß mindestens einer der beiden Streifen (2, 5) der Mikrowellenleitung in Laufrichtung der Mikrowelle verschiedene Breiten aufweist, um unterschiedliche Kapazitäten zwischen Elektroden (4) und Streifen (2, 5) der Mikrowellenleitung auszugleichen.

0142021
83 P 1843 E

5. Steuerbares integriert-optisches Bauelement nach einem der Ansprüche 1 bis 4, dadurch g e k e n n z e i c h - n e t , daß mehrere nebeneinanderliegende Elektroden (4) das gleiche elektrische Potential aufweisen, wobei jeder Teil einer jeden dieser nebeneinanderliegenden Elektroden (4) eine praktisch gleich lange elektrische Verbindung zum zugehörigen Streifen (2, 5) der Mikrowellenleitung aufweist.

))) Europäisches Patentamt

**0142021**
Nummer der Anmeldung

**EUROPÄISCHER RECHERCHENBERICHT**

## EINSCHLÄGIGE DOKUMENTE

EP 84112084.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE - C1 - 3 218 626 (LANGMANN)<br>* Fig. 3,4; Ansprüche *<br>-- | 1,3-5 | G 02 B 6/12<br>G 02 F 1/03 |
| A | IEEE JOURNAL OF QUANTUM ELECTRONICS vol. QE-19, no. 9, September 1983<br>R.C. ALFERNESS et al. "High-Speed Traveling-Wave Directional Coupler Switch/Modulator for $\lambda$=1,32µm" Seiten 1339-1341<br>* Gesamt *<br>-- | 1 | |
| A | GB - A - 2 109 580 (WESTERN)<br>* Fig. 2; Seite 2, Zeile 24 - Seite 4, Zeile 10 *<br>-- | 1 | |
| A | IEEE JOURNAL OF QUANTUM ELECTRONICS vol. QE-17, no. 6, June 1981<br>R.C. ALFERNESS "Guided-Wave Devices for Optical Communication" Seiten 946-959<br>* Seite 947, rechte Spalte - Seite 953, linke Spalte *<br>---- | 1 | RECHERCHIERTE SACHGEBIETE (Int. Cl.4)<br><br>G 02 B 6/00<br>G 02 F 1/00<br>G 02 F 3/00 |

Der vorliegende Recherchenbericht wurde für alle Patentansprüche erstellt.

| Recherchenort | Abschlußdatum der Recherche | Prüfer |
|---|---|---|
| WIEN | 16-01-1985 | GRONAU |